# EUROPEAN PATENT SPECIFICATION

(11) **EP 0 713 842 B1**
(45) Date of publication and mention of the grant of the patent: **18.07.2001**
(21) Application number: 95306946.5
(22) Date of filing: 29.09.1995
(51) Int. Cl.: C02F 1/48

(54) **Apparatus for manufacturing magnetized water and magnetic force generator**
Vorrichtung zum Herstellen von magnetisiertem Wasser und Magnetfeldgenerator
Dispositif pour la production de l'eau magnétisée et générateur de champ magnétique

(30) Priority: 25.11.1994 JP 29179994; 25.11.1994 JP 29180094
(43) Date of publication of application: 29.05.1996
(73) Proprietor: Hattori, Toshimitsu, Fukuoka-shi, Fukuoka 810 (JP); Ohta Co., Ltd., Fukuoka-shi, Fukuoka 810-0042 (JP)
(72) Inventor: Hattori, Toshimitsu, Fukuoka-shi, Fukuoka 810 (JP); Ohta, Masaru, Fukuoka-shi, Fukuoka 810 (JP)
(74) Representative: Piésold, Alexander J.

(56) References cited:
- EP-A- 0 604 305
- EP-A- 0 616 977
- WO-A-92/14681
- PATENT ABSTRACTS OF JAPAN vol. 012, no. 365 (C-532), 29 September 1988 & JP 63 116797 A (HITACHI ELEVATOR ENG & SERV CO LTD), 21 May 1988,
- Extract of "The First Step of Stainless Steel", pp. 10-15, Japanese Stainless Association, December 15, 1997

## Description

The present invention relates to an apparatus for manufacturing magnetized water (e.g. suitable for lotions) and to a magnetic force generator for manufacturing magnetized water.

Magnetized water manufactured by applying a magnetic force to water has recently come to be used for lotions. The magnetized water has conventionally been manufactured by arranging permanent magnets in a water storage tank in such a manner that different magnetic poles of the magnets face each other, whereby magnetized water is formed between the different magnetic poles.

However, if a magnetic force is to be applied to substantially all the water stored in the water storage tank, large-sized or a large number of permanent magnets are required, particularly if the water storage tank is itself large. This results in a requirement for a large magnetizing apparatus.

In addition the gaps between opposing faces of the permanent magnets cannot be made small in a conventional apparatus. If a small gap is used, the size or the number of the permanent magnets must be made larger. Further, with a small gap, there is an increased tendency for impurities to attach to the surfaces of the permanent magnets, because the water stored in the tank is still. This can render the apparatus insanitary.

It is known from EP-A-0604305 to provide a device for the preparation of water having a hexagonal molecular structure in which magnets are arranged on opposite sides of a delivery pipe. It is also known from EP-A-0616977 to arrange pairs of magnets on opposite sides of a pipe for the purpose of preventing build-up of deposits. In that document, two pairs of magnets are used in series with each pair of magnets having different like poles facing each other. From WO-A-92/14681 (over which claim 1 has been characterised) it is known to "treat" water by passing it through a magnetic field which is generated by pairs of magnets arranged on opposite sides of a pipe. The poles of the magnets are serrated so that the magnetic flux density experienced by the water fluctuates between high and low values, to prevent build up of deposits. From JP-A-63/116797 it is also known to direct water through a magnetizer in order to remove red rust particles.

According to the present invention, there is provided a magnetic force generator for manufacturing magnetized water, comprising a water passage arranged to receive water passed therealong, and magnetizing means for generating a line of magnetic force perpendicular to the direction in which the water passes along the passage, characterised in that said magnetic force generator comprises a first chamber which is connected to a second chamber by means of three branch pipes arranged to carry the water through the magnetic force generator in parallel, each of the branch pipes having a long and narrow transverse cross-sectional shape, with magnetizing means in the form of magnets positioned externally of the branch pipes and arranged to generate a strong magnetic field across the flow of water in the direction of least dimension of each branch pipe.

Preferably the apparatus comprises a storage tank, the above described magnetic force generator and a passage for passing water from the storage tank to the magnetic force generator, wherein the magnetic force generator is located externally of the storage tank. A pump is provided for pumping the water from the storage tank via the water passage and return it to the storage tank.

With such an arrangement, as the water passes through the magnetic force generator the water is magnetized. There is no need to provide magnets in the storage tank. Thus, the size or the number of the permanent magnets can be made smaller. Moreover, the possibility of impurity attachment can be reduced. In other words, the apparatus need not be large and has a reduced chance of becoming insanitary.

The magnetic force generator is arranged to generate a line of magnetic force approximately perpendicular to the direction in which water passes along the passage. With such an arrangement, a stronger magnetic force can act on the water.

The magnetic force generator may be provided midway of the water passage.

In a preferred embodiment, plural magnetic force generators are arranged in parallel along the water passage.

In another preferred embodiment plural magnetic force generators are arranged in series along the water passage.

If plural magnetic force generators are arranged in parallel in the water passage, a large quantity of magnetized water can be manufactured at the same time.

If plural magnetic force generators are arranged in series in the water passage, water can be magnetized with a stronger magnetic force per cycle.

In a magnetic force generator for manufacturing magnetized water, however, replacement of the permanent magnets with new ones may be troublesome. That is, in order to apply a strong magnetic force to a water stream in the water passage, it is desired that the distance, i.e., gap, between the permanent magnets arranged interposing the water stream therebetween is made as small as possible. However, if the permanent magnets are incorporated in the water passage for the purpose of making the gap smaller, the whole generator must be replaced for the replacement of the permanent magnets. In order to replace the whole generator, however, the water stream in the water passage must be temporarily stopped, and this means that the operation of the magnetized water manufacturing apparatus must be stopped.

A preferred magnetic force generator comprises a main body defining a portion of the water passage having a long and narrow cross-section, said main body being formed from a non-magnetic material, and a pair of permanent magnets arranged adjacent to each of the longer sides of the water passage with the water passage therebetween and with opposite magnetic poles of the magnets facing each other for generating said line of magnetic force approximately perpendicular to the direction in which water passes along the passage.

Preferably, the main body and the permanent magnets are held between a pair of spaced support members.

Thus, for example, the permanent magnets can be separated from the main body by removing one or both support members. The permanent magnets can then be replaced while leaving the main body as it is. Accordingly, only the permanent magnets can be replaced without replacing the whole magnetic force generator.

Some preferred embodiments will now be described by way of example only and with reference to the accompanying drawings in which:
Fig. 1 is a schematic view of a preferred apparatus for manufacturing magnetized water according to the present invention;
Fig. 2 is a schematic perspective view of a preferred magnetic force generator provided in the water passage shown in Fig. 1;
Fig. 3 is a partially exploded, partially cutaway view of the magnetic force generator of Fig. 2;
Fig. 4 is a vertical sectional view of the magnetic force generator of Fig. 2;
Fig. 5 is an exploded perspective view of the central part of the magnetic force generator of Fig. 2;
Fig. 6A is a horizontal cross-sectional view of the magnetic force generator of Fig. 2;
Fig. 6B is an enlarged view of the part B shown in Fig. 6A;
Fig. 7 is a vertical cross-sectional view of the central part of the magnetic force generator of Fig. 2;
Fig. 8 is a perspective view showing a pair of magnetic force generators of Fig. 2 arranged in parallel;
Fig. 9 is a perspective view showing a pair of magnetic force generators of Fig. 2 arranged in series.
Fig. 10 is a graph showing ¹⁷O-NMR chart obtained by measuring a tap water of Osaka Prefecture;
Fig. 11 is a graph showing ¹⁷O-NMR chart obtained by measuring water magnetized by the preferred apparatus of the present invention;
Fig. 12 is a graph showing ¹⁷O-NMR chart obtained by measuring the tap water after 17 days;
Fig. 13 is a graph showing ¹⁷O-NMR chart obtained by measuring the magnetized water after 17 days; and
Fig. 14 is a graph showing ¹⁷O-NMR charts obtained by measuring tap waters of Akishima-shi and Nerima-ku.

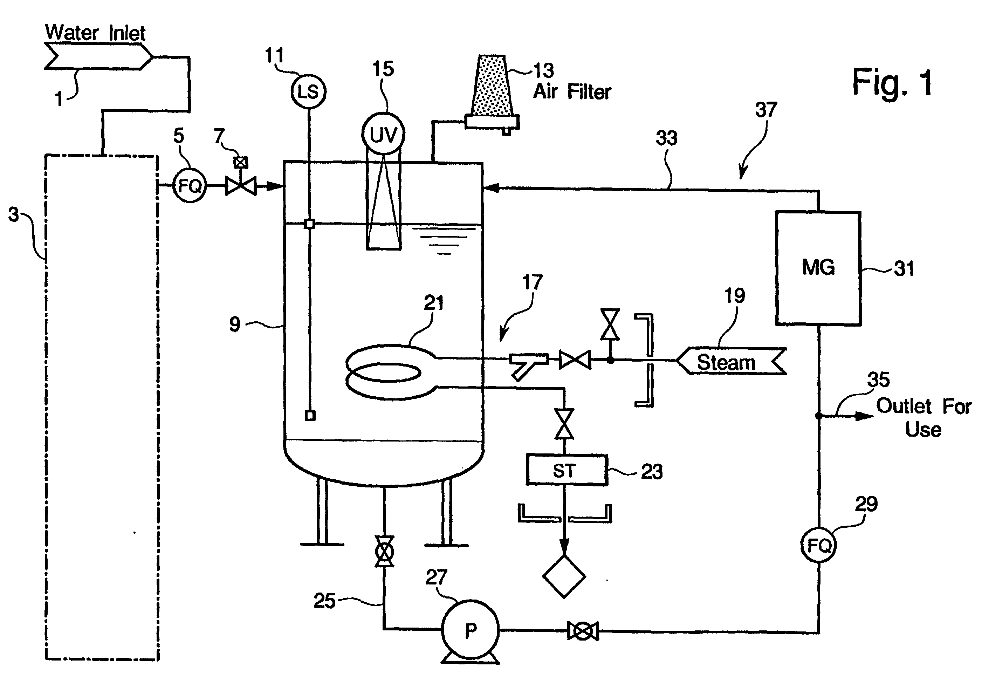

Fig. 1 is a schematic view of a preferred embodiment of the complete magnetized water manufacturing apparatus. In this figure, raw water such as tap water is introduced into a pretreatment device 3 through a water inlet 1. In the pretreatment device 3, the raw water is treated with various filters to remove inorganic ions, TOC (total oraganic carbon), bacteria, fine particles, etc. to a given extent, so as to give pure water. The pure water passes through a flow rate measuring instrument 5 and a valve 7, and is stored in a pure water tank 9. This pure water tank 9 is equipped with a level switch 11 for adjusting the water surface level. The level switch 11 controls the valve 7 to adjust the water surface level. Because the water surface level may be varied, the pure water tank 9 is provided with a vent hole to allow air to pass freely in and out of the pure water tank 9. This vent hole is provided with an air filter 13 to inhibit various bacteria from entering the pure water tank 9. The pure water tank 9 is further provided with an ultraviolet sterilizer 15 for continually sterilizing the pure water in the tank, so that if any bacteria enters the pure water tank 9 through the air filter 13, they are killed.

In order to complete the sterilization, a steam heater 17 is fixed inside the pure water tank. The steam heater 17 periodically raises the temperature of the pure water in the pure water tank 9 to about 85°C to sterilize the pure water. This is done by discharging steam 19 through a tube into the pure water tank 9, the steam raising the temperature of the pure water as it passes through a coil tube 21. The steam is then discharged from the tank and separated into water vapour and water by a steam trap (ST) 23.

The bottom of the pure water tank 9 is provided with an outward pipe 25 for withdrawing the pure water from the pure water tank 9. The outward pipe 25 is connected with a pump 27 for pumpiing the pure water. The outward pipe 25 also connects the pump 27 with a flow rate measuring instrument 29 and a magnetic force generator 31 so that the pure water is further sent by the pump 27 and advances toward the magnetic force generator 31 by way of the flow rate measuring instrument 29. The magnetic force generator 31 generates a field of magnetic force whose field lines are approximately perpendicular to the stream of the pure water in the outward pipe 25. Details of the magnetic force generator 31 will be described later.

The pure water leaving the magnetic force generator 31 is returned into the upper part of the pure water tank 9 through an inward pipe 33. In the outward pipe 25, downstream of the pump 27, an outlet 35 is provided to discharge water which has been magnetized following sufficient circulation. The outward pipe 25 and the inward pipe 33 together form a water passage or a cyclic water channel 37.

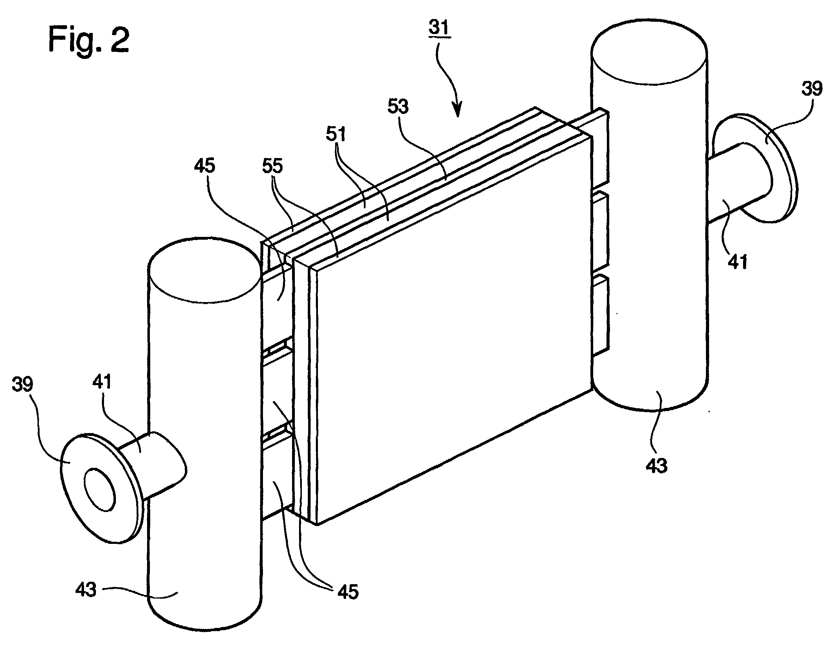

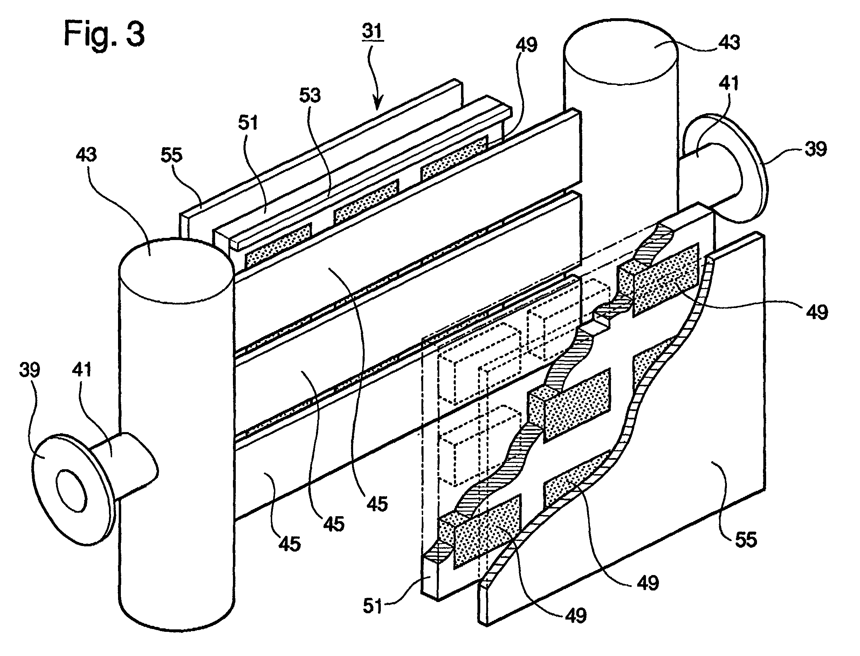

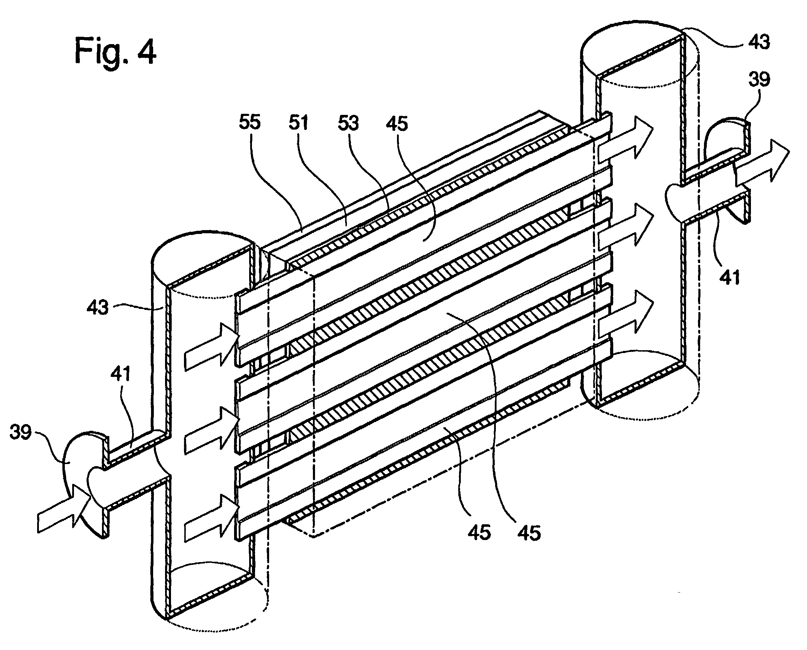

A preferred magnetic force generator 31 in accordance with the invention will now be described in more detail with reference to Figs. 2 to 7.

As shown in Fig. 2, the magnetic force generator 31 has at each end a flange 39 to connect the generator in series with the cyclic water channel 37. This flange is fixed to a connecting pipe 41 which is provided at each end of the generator. The connecting pipes 41 are connected at the other ends with chambers 43, respectively. The chambers 43 are connected with each other through three pipes 45 for branching the supply of pure water (branch pipes 45). These flanges 39, connecting pipes 41, chambers 43 and branch pipes 45 are all preferably made of stainless steel (JIS No.SUS-304), and their inner and outer surfaces are subjected to abrasion finishing to form sanitary piping. Further, the flanges 39, the connecting pipes 41, the chambers 43 and the three branch pipes 45 are united in one body by means of welding or the like to form a water channel main body in which the pure water runs.

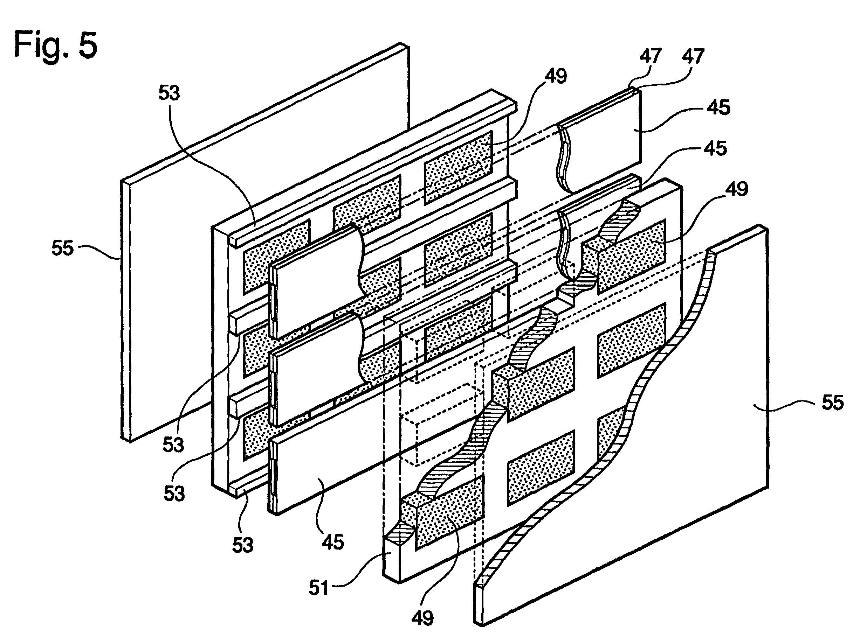

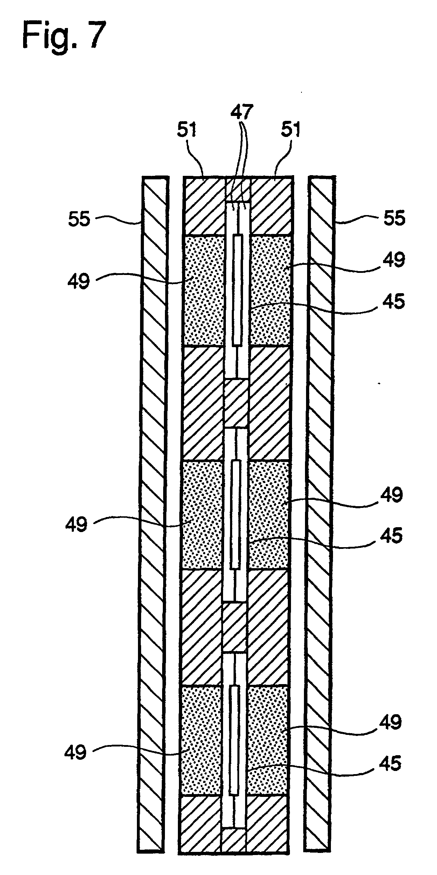

Each of the branch pipes 45 has a transverse section of a long and narrow rectangular shape as shown in Figs. 5 and 7. That is, two flat and channel-shaped members 47 are combined together by means of welding or the like. The shorter side of the long and narrow rectangle preferably has a length of about 2 mm. The three branch pipes 45 are arranged on almost the same plane so that their long and narrow rectangular sections are aligned in the direction of the longer side.

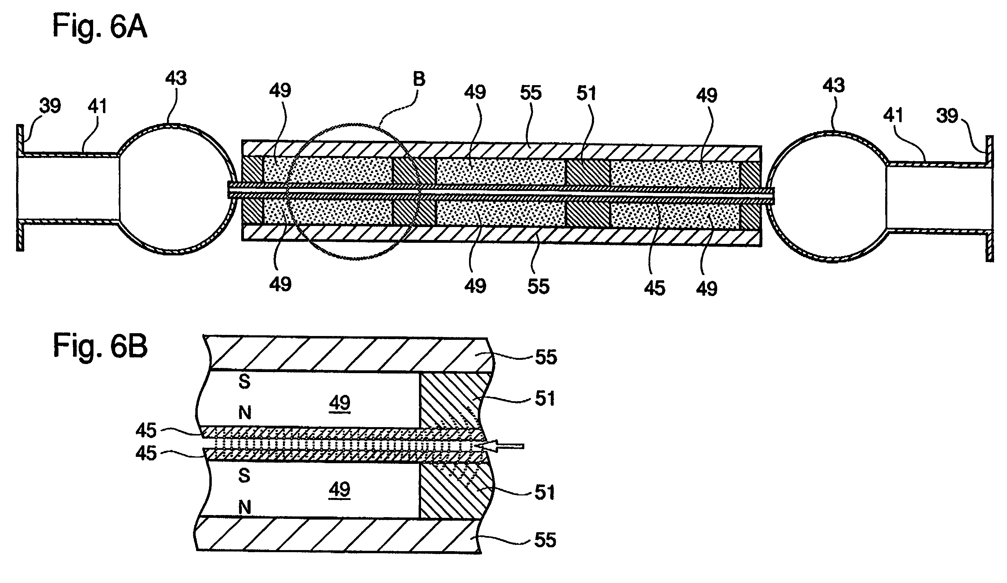

Adjacent to the longer side of the long and narrow rectangular section of the branch pipes 45, pairs of permanent magnets 49 are arranged in such a manner that the branch pipes 45 are interposed therebetween. The different magnetic poles (S, N) of the magnets face each other. In this embodiment, each of the permanent magnets 49 is in the form of a flat rectangular parallelepiped. The magnetic poles (S, N) are present on the largest two surfaces of the rectangular parallelepiped as shown in Fig. 6B. One magnet of a pair of magnets 49 is arranged in such a manner that its S pole surface faces one surface of the branch pipe 45, the other of the magnets 49 is arranged in such a manner that its N pole surface faces the other surface of the branch pipe 45.

In this embodiment, three pairs of permanent magnets 49 are used per one branch pipe 45, that is, nine pairs of permanent magnets 49 are used in total. The nine permanent magnets on each side are encased in a magnet encasing board 51 made of PVC (polyvinyl chloride). The encasing of the permanent magnets 49 in the magnet encasing board 51 may be conducted by incorporating the magnets 49 and the board 51 as one integral unit, or may be conducted in such a manner that the magnets 49 can be removed individually from the board 51. Such a pair of magnet encasing boards 51 as mentioned above are arranged so that the branch pipes 45 are interposed between the boards 51 by way of spacers 53 provided between the three branching pipes 45.

Outside both of the magnet encasing boards 51, a press board 55 is provided to hold the magnet encasing boards 51 encasing the permanent magnets and the branch pipes 45 together as one united body. The press board 55 is made of PVC (polyvinyl chloride).

The holding together of the magnetic force generator 31 may be carried out by screwing covers (not shown in figures) to the outside of the press boards 55. In detail, a pair of covers having almost channel-shaped transverse section are screwed at screwing flanges each formed at the edge of each cover. Alternatively, a plurality of pairs of nuts and bolts penetrating the press board 55 and the magnet encasing board 51 on one side, passing through the branching pipes 45 and further penetrating the other magnet encasing board 51 and press board on the other side may be used for holding them together. This press board is made of PVC similarly to the magnet encasing board.

The function of this embodiment is described below.

The pure water tank 9 has a volume of, for example, 1 m³, and the magnetization of all water is carried out over a period of, for example, 24 hours. In detail, the pump 27 is continuously operated to repeatedly send the pure water of the tank 9 through the cyclic water channel 37, thereby circulating the water. Even if the magnetized water is diluted with unmagnetized pure water in the tank 9, it can be sufficiently magnetized in time owing to the repeated circulation of the water. The circulating pure water is magnetized with a strong magnetic force when it runs within the branch pipes 45 of the magnetic force generator 31. This strong magnetic force can be attained by arranging the permanent magnets 49 having a high magnetic flux density (12,000 gauss) in such a manner that the narrow water channels of the branch pipes 45 are interposed between the permanent magnets 49.

By arranging pairs of the permanent magnets 49 in such a manner that they face each other with the branch pipes interposed therebetween, a magnetic field is generated between the permanent magnets 49 having lines of magnetic force which are approximately perpendicular to the stream of the pure water, thereby making the magnetic force stronger. Since the branch pipes 45 are themselves formed from non-magnetic material, stainless steel (SUS-304), the magnetic field thus generated is not influenced by the material of the branch pipes 45. That is, the magnetic field is stabilized with little loss of the permanent magnets' strength.

In the pure water on which the strong magnetic force has acted, a mass of molecules called a "cluster" becomes smaller. In other words, magnetization of water is carried out. The magnetized water thus obtained is very suitable for lotion preparations.

The pure water is continuously circulated through the cyclic water channel 37, becoming more and more magnetized. After a time, the water stored in the pure water tank 9 becomes thoroughly magnetized. After 24 hours, the magnetization of the water is complete and magnetized water can be discharged from the use point.

If it is necessary to dismantle the magnetic force generator 31 for the purpose of maintenance or inspection, the press board 55 can be removed, thereby allowing the magnet encasing board 51 to be separated from the branch pipes 45. This allows the permanent magnets 49 encased in the magnet encasing board 51 to be easily replaced. During the replacement, the three branch pipes 45, the chambers 43 and the connecting pipes 41 can still be connected to the cyclic water channel 37. Hence, the maintenance or inspection of the magnetic force generator 31 can be carried out without stopping the circulation of the pure water.

The effects of this embodiment are described below.

According to this embodiment, as mentioned above, the magnetic force generator 3 for magnetizing pure water is not provided in the pure water tank 9 but provided midway of the cyclic water channel 37, and hence, the size of the magnetic force generator 31 can be made smaller. Accordingly, the size of the whole apparatus for manufacturing magnetized water can be made smaller.

Further, there is provided a magnetic force generator 31 having the magnets disposed outside the branching pipes 45 which constitute a part of the cyclic water channel 37, and hence, bacteria are unlikely to be able to contaminate the pure water during maintenance or inspection of the magnetic force generator 31. Accordingly, the apparatus of this structure is more hygienic than conventional equipment in which the magnets 49 are provided in the pure water tank 9.

If the magnetic force generator 31 were provided in the pure water tank 9, the water present in the narrow gap between pairs of the permanent magnets 49 would be substantially stationary. In this embodiment, however, the water which is present between pairs of the permanent magnets 49 is continually flowing, and hence, the apparatus is again more hygienic.

In this embodiment, the section of the branch pipe 45 is in the form of a long and narrow rectangle, and therefore a magnetic force of sufficient strength can be obtained by making the shorter side of the rectangular section as short as possible. In addition, if the longer side of the rectangular section is made as long as possible, the cross-sectional area can be made large, thereby ensuring a sufficient rate of flow. In other words, by making the sectional area large, the resistance in the passageway at the branch pipes 45 of the cyclic water channel 37 can be lowered, and hence the discharge pressure of the pump 27 does not need to be so high. Accordingly, the pump 27 can be of relatively low capacity.

While the magnetized water manufacturing apparatus of this embodiment is continuously working, a required quantity of the magnetized water may be discharged from the use point 35, with the same amount of pure water being fed into the pure water tank 9 by way of the pretreatment device 3. Because it is unnecessary to stop the stream of the pure water in the cyclic water channel 37 even when the magnetic force generator 31 is being inspected or maintained, the above working of the apparatus does not need to be stopped.

As described above, the permanent magnet 49 is in the form of a flat rectangular parallelepiped and the length directions of the rectangular parallelepiped are parallel with the direction of the stream of the branch pipes 45. Hence, the zone where the magnetic field is generated can be lengthened in the direction of the stream, whereby the time (distance) in which the pure water is magnetized can be made longer.

Further preferred embodiments and modifications of the present invention are described below.

In the above embodiment, the permanent magnets 49 of the magnetic force generator 31 are arranged in pairs, but in another embodiment, one permanent magnet in the form of an arc or horse-shoe may be arranged in such a manner that its two ends (both poles) face each other through the branch pipes 45.

In the above embodiment, further, the magnetic force generator 31 used for the magnetized water manufacturing apparatus employs permanent magnets 49, but instead, electromagnets may be employed in other embodiments.

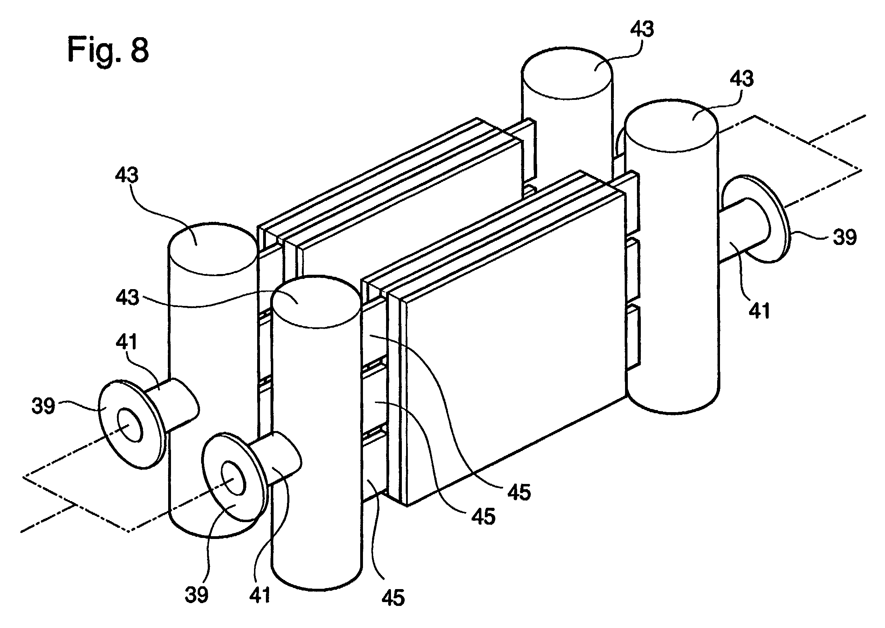

In the above embodiment, moreover, one magnetic force generator 31 is provided in the cyclic water channel 37, but in other preferred embodiments, plural magnetic force generators may be arranged in parallel in the cyclic water channel as shown in Fig. 8. By arranging the plural magnetic force generators 31 in parallel, the total sectional area of the branching pipes 45 can be enlarged, thereby reducing the resistance of the passageways of the magnetic force generators and lightening the load on the pump 27. In addition, the arrangement of the plural magnetic force generators 31 in parallel makes it possible to manufacture large quantities of magnetized water at the same time.

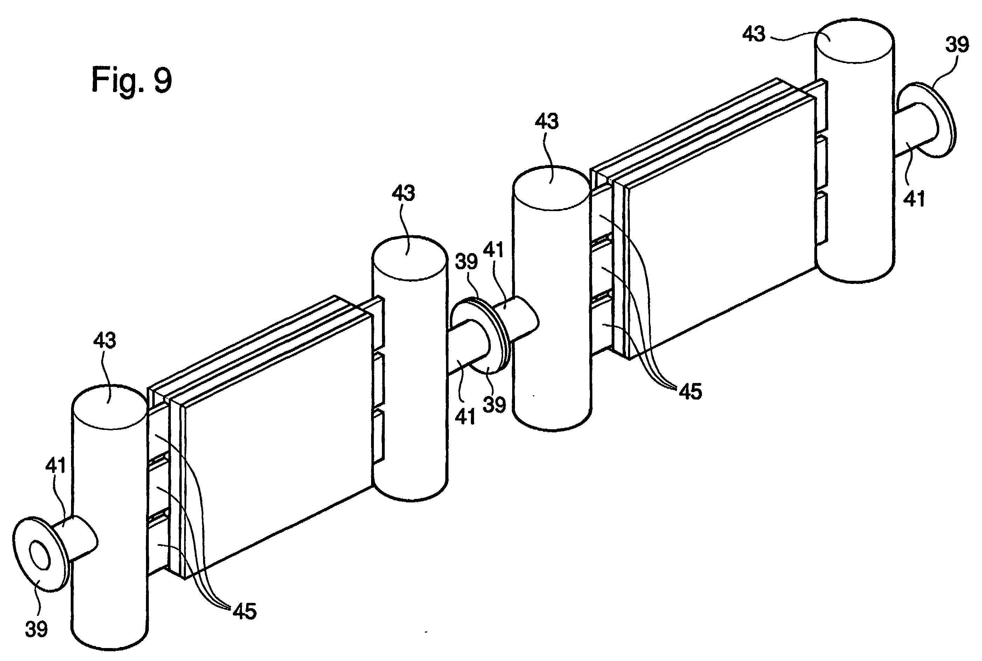

Furthermore, plural magnetic force generators 31 may be provided in series in the cyclic water channel 37 (Fig.9). By arranging the plural magnetic force generators 31 in series, the pure water passes through the plural magnetic force generators 31, that is, the pure water receives the action of the magnetic force to a greater extent, whereby magnetization of the pure water can be effectively performed.

In the above embodiment, the non-magnetic material for forming the branch pipes 45 is stainless steel, but in other preferred embodiments, other non-magnetic materials than stainless steel, i.e., ceramics, may be employed.

The preferred structure of the magnetized water manufacturing apparatus of the present invention is explained hereinbefore with reference to some embodiments. The magnetized water manufactured by such apparatus is high in the degree of magnetization and shows high quality, and it is presumed that water molecule groups called "clusters" are much smaller than those of ordinary tap water. The size of the cluster can be measured by a nuclear magnetic resonance (NMR) measuring device as described later.

That is to say, an atomic nucleus has a positive charge and an electron which revolves around the nucleus has a negative charge, so that the minimum unit of a substance can be regarded as a magnet. When this small magnet is placed in a static magnetic field, the magnet comes to point to some limited directions. When the nuclear spin is 1/2 (simplest case), the magnet comes to point to two limited directions, whereby there arises an energy difference between those two states. In other words, one state is more stable than the other state. If the nucleus in this low energy state absorbs energy somehow, the nucleus can get to the high energy state. Accordingly, when energy is given in the form of electromagnetic radiation to a nucleus, the nucleus absorbs the electromagnetic radiation and gets to the high energy state. The phenomenon that a certain substance system absorbs energy at a specific electromagnetic wavelength as described above is called the "resonance phenomenon". This energy can be taken out as a signal, and the energy taken out as the signal is NMR. The nuclear magnetic resonance can be measured by a NMR measuring device.

In general, a water molecule H₂O does not exist alone, but exists in the polymeric form called "cluster" mentioned above. In more detail, water is in the state of clusters of about 36 or 37 molecules, holding S, C, Cl, Hg, Pb, Cd and the like.

The water molecule state has an influence on the nuclear magnetic resonance phenomenon, and therefore the state of the water molecule cluster can be judged by measuring the energy absorbed in the resonance phenomenon. More specifically, it is thought that the state of the water molecule cluster can be predicted by a half band width (line width) of a peak shown in a chart obtained by the ¹⁷O-nuclear magnetic resonance measurement using a NMR measuring device. That is, the line width is a value expressed as a reciprocal of the interference time (frequency: Hz), and it can be thought that the wider the line width is, the larger the number of connecting water molecules there are, indicating that the size of the cluster is large and the degree of magnetization is low. On the other hand, it can be construed that the narrower the line width is, the smaller the number of connecting water molecules there are, indicating that the size of cluster is small and the degree of magnetization is high.

When the ¹⁷O-nuclear magnetic resonance of water was measured at an observation center frequency of 54.1 MHz at room temperature to obtain a chart and a line width is read from the chart, tap water has a line width of 110 to 150 Hz, Evian (trade mark) has a line width of 102 to 120 Hz, mineral water has a line width of 80 to 110 Hz, natural spring water has a line width of 70 to 150 Hz, and hot spring water has a line width of 58 to 90 Hz, each on an average.

The average value of the line width of the tap water is in the range of 110 to 150 Hz and is considerably high. With regard to the height of the average value of the line width, the tap water is followed by Evian, mineral water, natural spring water and hot spring water in this order, and the hot spring water reveals the lowest value. Also from this fact, it can be understood that water having such a high quality as required for drinking water or preparations generally has a small line width and a high degree of magnetization.

According to the preferred apparatus of the present invention for manufacturing magnetized water, tap water or natural spring water of low quality, which has a large line width in a chart obtained by the ¹⁷O-nuclear magnetic resonance measurement using a NMR measuring device as described later, can be highly magnetized, whereby magnetized water of high quality which has a small line width and is almost free from change of the line width with time can be manufactured.

According to the preferred magnetized water manufacturing apparatus of the present invention, as described hereinbefore, the water sent from the water tank receives the action of a magnetic force generated by the magnetic force generator provided in the cyclic water channel, and becomes magnetized water, which is returned to the water tank. Therefore, if the cycilc water channel is sufficiently narrowed, it becomes possible to allow a strong magnetic force to act on the water. Accordingly, the size of the whole apparatus can be made smaller. Even if the cyclic water channel in which running water is present is narrowed, the preferred apparatus of the present invention does not become insanitary as compared with the conventional apparatus in which still water is present. In the preferred apparatus of the present invention, moreover, the magnetic force generator generates a magnetic field whose lines of magnetic force are approximately perpendicular to the water stream, and hence, a stronger magnetic force can be allowed to act on the water. As a result, magnetized water of high quality can be more easily manufactured.

According to the preferred magnetic force generator of the present invention, the permanent magnets can be replaced by only unfixing the press board, and hence, it is unnecessary to replace the whole magnetic force generator, resulting in economical effects.

The function of the preferred magnetized water manufacturing apparatus according to the present invention will be further described with reference to the following reference example and working example.

### Reference Example 1

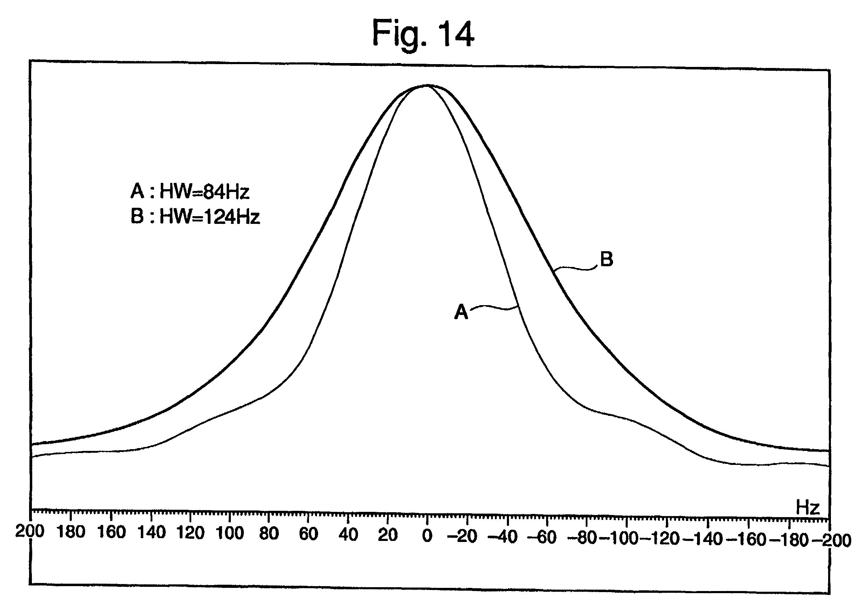

Tap water collected at Akishima-shi and Nerima-ku in Tokyo was measured on a ¹⁷O-NMR using a NMR measuring device (produced by NIHON DENSHI K.K., type: JNM-EX 400) under the conditions set out in Table 1. The ¹⁷O-NMR chart obtained is shown in Fig. 14.

**Table 1**

| Items of Measuring Conditions | Measuring Conditions |
|---|---|
| Nucleus | ¹⁷O |
| Measuring temperature | 22°C |
| Pulse sequence | single pulse |
| Measuring center frequency | 54.10 MHz |
| Number of data points | 16,384 |
| Measuring region | 10,000.0 Hz |
| Number of integrating times | 2,048 |
| Peak attenuation time | 0.051 second |
| Pulse interval | 0.100 second |
| Pulse width | 15.5 microseconds |

In Fig. 14, chart A is a chart obtained by measuring the tap water of Akishima-shi, and chart B is a chart obtained by measuring the tap water of Nerima-ku. By comparison between the tap water of Akishima-shi and the tap water of Nerima-ku, as is clear from Fig. 14, the line width HW of the peak shown in the chart A of the tap water of Akishimashi is 84 Hz, the line width HW of the peak shown in the chart B of the tap water of Nerima-ku is 124 Hz. From the results, it has been confirmed that the line width of the tap water of Nerima-ku is within the aforesaid range (110 to 150 Hz) of the average line width of tap water, while the line width of the tap water of Akishima-shi is smaller than the average line width, and hence the tap water of Akishima-shi has relatively small clusters and a high degree of magnetization.

### Working Example 1

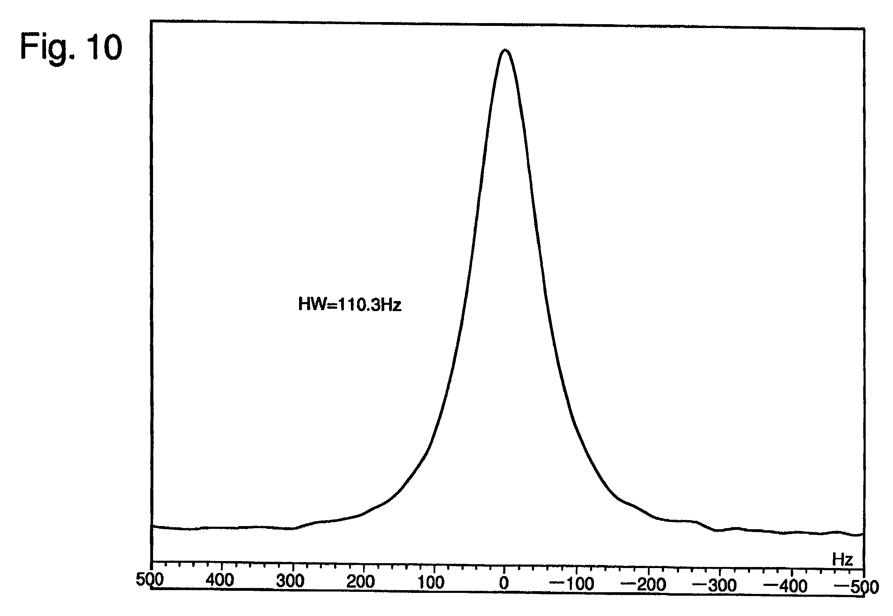

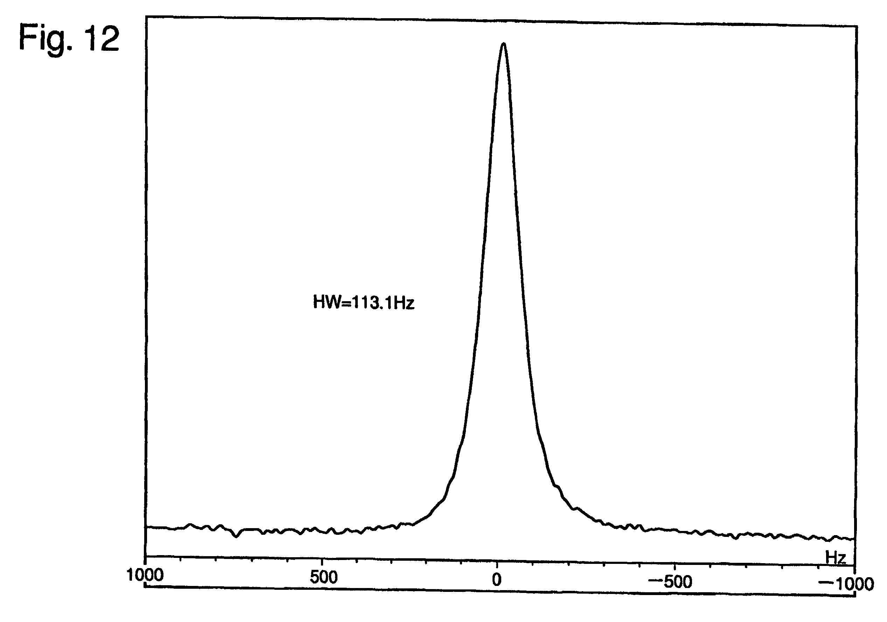

Ordinary water (tap water of Kashihara-shi in Osaka Prefecture) was measured on a ¹⁷O-NMR in the same manner as described in Reference Example 1. The ¹⁷O-NMR chart obtained is shown in Fig. 10. After the ordinary water was allowed to stand for 17 days, the ordinary water was measured on a ¹⁷O-NMR again and was observed on the change of the line width with time. The ¹⁷O-NMR chart obtained is shown in Fig. 12.

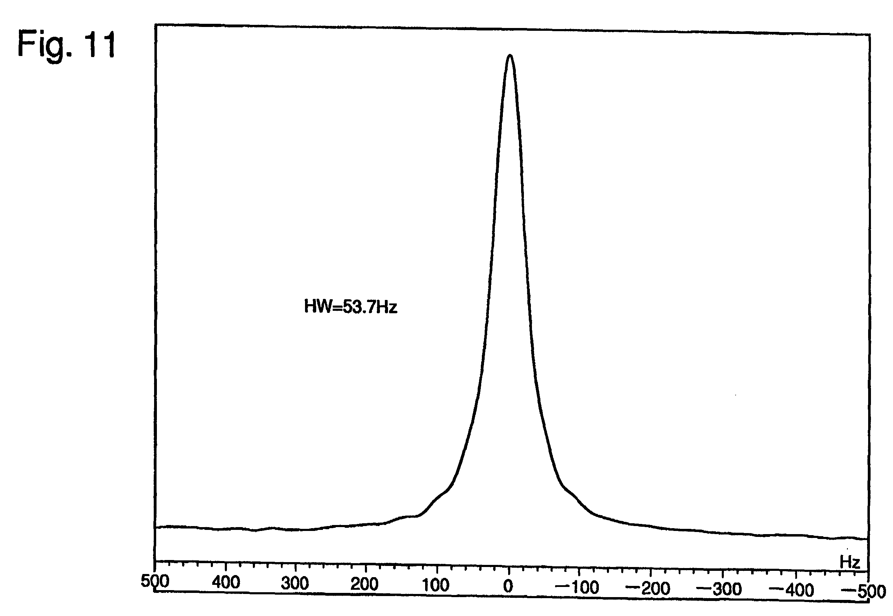

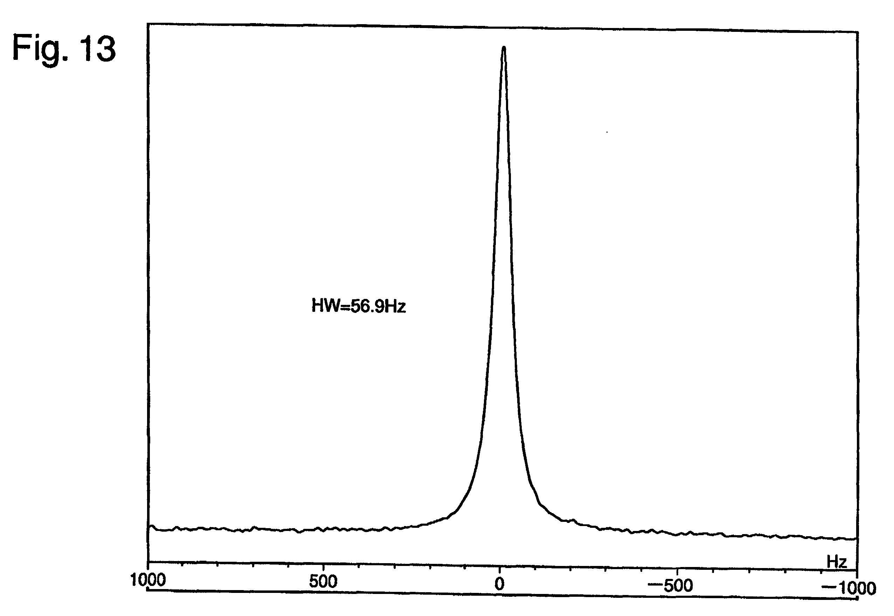

Subsequently, magnetized water was manufactured from the above ordinary water using the magnetized water manufacturing apparatus of the aforementioned embodiment (Fig. 1 to Fig. 7). The magnetized water was measured on its ¹⁷O-NMR in the same manner as described in Reference Example 1. The ¹⁷O-NMR chart obtained is shown in Fig. 11. After the magnetized water was allowed to stand for 17 days, the magnetized water was measured on its ¹⁷O-NMR again and was observed on the change of the line width with time. The ¹⁷O-NMR chart obtained is shown in Fig. 13.

As shown in Fig. 10 and Fig. 12, the line width HW obtained from the ¹⁷O-NMR chart of the ordinary water is 110.3 Hz in the first measurement, and it is 113.1 Hz in the second measurement. The line width of the ordinary water used as raw water is within the aforesaid range (110 to 150 Hz) of the average line width of tap water, and it is midway between the line width (124 Hz) of the tap water of Nerima-ku and the line width (84 Hz) of the tap water of Akishima-shi.

As shown in Fig. 11 and Fig. 13, the line width HW obtained from the ¹⁷O-NMR chart of the magnetized water manufactured from the above ordinary water is 53.7 Hz in the first measurement, and it is 56.9 Hz in the second measurement.

By comparison between the ordinary water and the magnetized water on the line width of the first measurement, the line width of the ordinary water (raw water of the magnetized water) is 110.3 Hz (see: Fig. 10), while the line width of the magnetized water manufactured from the ordinary water using the preferred apparatus of the invention is 53.7 Hz (see: Fig. 11), and the line width of the magnetized water is reduced to about 1/2 of the line width of the ordinary water.

The line width of the magnetized water is much lower than the line width of the ordinary water used as the raw water, as well as being lower than any of the line widths for the tap water in the Reference Example 1. From this fact, it has been confirmed that the magnetized water can be of much higher quality than the tap water from which it is manufactured, by using the preferred apparatus of the present invention.

The change with time of the ordinary water and the magnetized water on the line width was examined from the results of the second measurement. As a result, the line width of the ordinary water changed to 113.1 Hz (see: Fig 12) from 110.3 Hz after 17 days and the increase is only less than 3%, while the line width of the magnetized water changed to 56.9 Hz (see: Fig. 13) from 53.7 Hz after 17 days and the increase is less than 6%.

The difference in the line width between the first measurement and the second measurement is very small in both cases, and it can be said that the difference is within the error range. Accordingly, it has been confirmed that the quality of the magnetized water manufactured by the preferred apparatus of the present invention can be kept stably for 17 days similar to ordinary water.

From the above results, it was understood that since the line width in the chart of the magnetized water obtained by the ¹⁷O-nuclear magnetic resonance measurement using a NMR measuring device is small and the change of the line width with time is also small, the preferred magnetized water manufacturing apparatus according to the present invention can manufacture magnetized water of high and stable quality.

## Claims

1. A magnetic force generator (31) for manufacturing magnetized water, comprising a water passage (37) arranged to receive water passed therealong, and magnetizing means (49) for generating a line of magnetic force perpendicular to the direction in which the water passes along the passage, characterised in that said magnetic force generator comprises a first chamber (43) which is connected to a second chamber (43) by means of three branch pipes (45) arranged to carry the water through the magnetic force generator in parallel, each of the branch pipes having a long and narrow transverse cross-sectional shape, with magnetizing means in the form of magnets (49) positioned externally of the branch pipes and arranged to generate a strong magnetic field across the flow of water in the direction of least dimension of each branch pipe.

2. A magnetic force generator as claimed in claim 1, characterised in that the branch pipes (45) are of rectangular cross-section having flat sides.

3. A magnetic force generator as claimed in claim 1 or 2, characterised in that the side of least dimension of the long and narrow cross-section has a length of 2mm.

4. A magnetic force generator as claimed in claim 1, 2 or 3, characterised in that the magnets (49) generate a magnetic field having a magnetic flux density of 12,000 gauss.

5. A magnetic force generator as claimed in any preceding claim, characterised in that a plurality of magnets (49) are arranged in series along each branch pipe (45).

6. A magnetic force generator as claimed in any preceding claim, characterised in that the magnets (49) are permanent magnets of rectangular parallelepiped shape.

7. A magnetic force generator as claimed in any preceding claim, characterised in that the branch pipes (45) are made of a non-magnetic stainless steel.

8. Apparatus for manufacturing magnetised water comprising a water tank (9) for storing water to be treated, a pump (27) for pumping the water from the tank via a water passage (37) arranged to return the water to the tank and a magnetic force generator (31) as claimed in any preceding claim disposed along the water passage for generating a line of magnetic force perpendicular to the direction in which water passes along the passage.

## Patentansprüche

1. Magnetkraftgenerator (31) zur Herstellung von magnetisiertem Wasser mit einer Wasserleitung (37), die dazu ausgelegt ist, darin durchlaufendes Wasser aufzunehmen, und mit magnetisierenden Mitteln (49) zur Erzeugung einer magnetischen Feldlinie, die senkrecht zu der Richtung ist, in der das Wasser durch die Leitung läuft, dadurch gekennzeichnet, daß der Magnetkraftgenerator eine erste Kammer (43) aufweist, die mit einer zweiten Kammer (43) mittels dreier Zweigrohre (45) verbunden ist, die dazu ausgelegt sind, das Wasser parallel durch den Magnetkraftgenerator zu tragen, wobei jedes der Zweigrohre eine lange und schmale transversale Querschnittsform aufweist mit magnetisierenden Mitteln in Form von Magneten (49), die außerhalb der Zweigrohre angeordnet und dazu ausgelegt sind, ein starkes Magnetfeld durch den Wasserfluß in Richtung der geringsten Ausdehnung jedes Zweigrohres zu erzeugen.

2. Magnetkraftgenerator nach Anspruch 1, dadurch gekennzeichnet, daß die Zweigrohre (45) einen rechtwinkligen Querschnitt mit flachen Seiten aufweisen.

3. Magnetkraftgenerator nach Anspruch 1 oder 2, dadurch gekennzeichnet, daß die Seite mit der geringsten Ausdehnung des langen und schmalen Querschnittes eine Länge von 2 mm aufweist.

4. Magnetkraftgenerator nach Anspruch 1, 2 oder 3, dadurch gekennzeichnet, daß die Magnete (49) ein magnetisches Feld mit einer magnetischen Flußdichte von 12.000 Gauss erzeugen.

5. Magnetkraftgenerator nach einem der vorstehenden Ansprüche, dadurch gekennzeichnet, daß eine Mehrzahl von Magneten (49) in Serie entlang jedes Zweigrohres (45) angeordnet ist.

6. Magnetkraftgenerator nach einem der vorstehenden Ansprüche, dadurch gekennzeichnet, daß die Magneten (49) Dauermagneten mit rechtwinkliger, parallelflacher Form sind.

7. Magnetkraftgenerator nach einem der vorstehenden Ansprüche, dadurch gekennzeichnet, daß die Zweigrohre (45) aus nicht-magnetischem rostfreiem Stahl hergestellt sind.

8. Vorrichtung zur Herstellung von magnetisiertem Wasser mit einem Wassertank (9) zur Aufbewahrung von zu behandelndem Wasser, einer Pumpe (27) zum Pumpen des Wassers aus dem Tank über eine Wasserleitung (37), die dazu ausgelegt ist, das Wasser in den Tank zurückzuführen, und einem Magnetkraftgenerator (31) nach einem der vorstehenden Ansprüche, der entlang der Wasserleitung angeordnet ist, zur Erzeugung einer magnetischen Feldlinie, die senkrecht zu der Richtung ist, in der Wasser durch die Leitung läuft.

## Revendications

1. Générateur de champ magnétique (31) pour la production d'eau magnétisée, comprenant une conduite d'eau adaptée pour recevoir de l'eau y circulant, et des moyens de magnétisation (49) pour générer une ligne de champ magnétique perpendiculaire à la direction suivant laquelle l'eau circule dans la conduite, caractérisé en ce que ledit générateur de champ magnétique comprend une première chambre (43) qui est reliée à une seconde chambre (43) par l'intermédiaire de trois dérivations (45) adaptées pour amener en parallèle l'eau au travers du générateur de champ magnétique, chacune des dérivations possédant une section en coupe transversale de forme longue et étroite, les moyens de magnétisation étant sous la forme d'aimants (49) situés à l'extérieur des dérivations et adaptés pour générer, au travers du courant d'eau, un champ magnétique intense suivant la direction de la plus petite dimension de chaque dérivation.

2. Générateur de champ magnétique suivant la revendication 1, caractérisé en ce que les dérivations (45) sont de section transversale rectangulaire à larges côtés.

3. Générateur de champ magnétique suivant l'une des revendications 1 ou 2, caractérisé en ce que le côté de plus petite dimension de la section transversale longue et étroite est de longueur de 2 mm.

4. Générateur de champ magnétique suivant l'une des revendications 1, 2 ou 3, caractérisé en ce que les aimants (49) génèrent un champ magnétique présentant une densité de flux magnétique de 12000 Gauss.

5. Générateur de champ magnétique suivant l'une des revendications précédentes, caractérisé en ce que plusieurs aimants (49) sont agencés en série le long de chaque dérivation (45).

6. Générateur de champ magnétique suivant l'une des revendications précédentes, caractérisé en ce que les aimants (49) sont des aimants permanents de forme parallélépipédique rectangle.

7. Générateur de champ magnétique suivant l'une des revendications précédentes, caractérisé en ce que les dérivations (45) sont en acier inoxydable amagnétique.

8. Dispositif pour la production d'eau magnétisée, comprenant un réservoir d'eau (9) pour stocker l'eau à traiter, une pompe (27) pour pomper l'eau depuis le réservoir via une conduite d'eau (37) adaptée pour ramener l'eau au réservoir, et un générateur de champ magnétique (31) suivant l'une des revendications précédentes, agencé le long de la conduite d'eau pour générer une ligne de champ magnétique perpendiculaire à la direction suivant laquelle l'eau circule dans la conduite.
